# FASCICULE DE BREVET EUROPEEN

(11) **EP 0 557 159 B1**
(45) Date de publication et mention de la délivrance du brevet: **09.07.1997**
(21) Numéro de dépôt: 93400324.5
(22) Date de dépôt: 09.02.1993
(51) Int. Cl.: G02F 1/15

(54) **Système électrochrome**
Elektrochrome Vorrichtung
Electrochromic device

(30) Priorité: 11.02.1992 FR 9201489
(43) Date de publication de la demande: 25.08.1993
(73) Titulaire: SAINT-GOBAIN VITRAGE, 92400 Courbevoie (FR)
(72) Inventeur: Ripoche, Xavier, F-75018 Paris (FR)
(74) Mandataire: Menes, Catherine

(56) Documents cités:
- CHIMICAOGGI Juin 1989, pp 41-45; B. SOCRATI: 'Electrochromism and electrochromic devices' Chapitres: Inorganic anodic non-insertion electrochromic materials et Electrochromic windows
- JAPANESE JOURNAL OF APPLIED PHYSICS vol. 28, no. 7, Juillet 1989, Tokyo, JP, pp 1290-1291; Y. SATO: 'Electrochromism in Thermally Oxidized Iridium Oxide Films in LiClO4/Propylene Carbonate'
- JOURNAL OF APPLIED PHYSICS, vol. 64, no. 7, Octobre 1988, New York, US, pp 3678-3683; W. ESTRADA et al.: 'Electrochromic nickel-oxide-based coatings made by reactive dc magnetron sputtering: Preparation and optical properties'
- JAPANESE JOURNAL OF APPLIED PHYSICS, vol. 30, no. 6, Juin 1991, New York, US, pp 1285-1289; K. YAMANAKA: 'The Electrochemical Behavior of Anodically Electrodeposited Iridium Oxide Films and the Reliability of Transmittance Variable Cells'

## Description

La présente invention a trait aux systèmes électrochromes, c'est-à-dire à des systèmes dont l'état de coloration peut varier de façon réversible par le passage d'un courant électrique. Plus précisément, l'invention a pour objet un perfectionnement aux systèmes électrochromes dans la composition desquels figure une couche mince d'oxyde d'iridium utilisée comme matériau électrochrome anodique. L'invention s'applique notamment à la réalisation de vitrages à transmission électrocommandée destinés au contrôle de l'apport solaire dans les bâtiments ou dans les véhicules automobiles.

Les systèmes électrochromes faisant l'objet de la présente invention sont constitués par un empilement de couches minces déposé sur un substrat transparent tel une feuille de verre, un second substrat - lui-aussi transparent dans le cas d'un système fonctionnant en transmission - venant de préférence recouvrir l'ensemble. Cet empilement comporte au moins une couche d'un matériau électrochrome susceptible d'insérer de façon réversible des cations, protons ou ions lithium généralement et dont les états inséré ou désinséré présentent des colorations différentes.

Les matériaux électrochromes les plus utilisés sont des oxydes de métaux de transition dont le changement de coloration est dû à un processus électrochimique d'insertion du cation conduisant à un changement du degré d'oxydation du métal. Ces matériaux se divisent en deux groupes, ceux à coloration cathodique qui se colorent lors d'une insertion comme les oxydes de tungstène, molybdène, niobium, titane et ceux à coloration anodique qui se décolorent lors d'une insertion comme les oxydes de nickel, d'iridium, de rhodium ou de cobalt.

Pour que la réaction électrochimique se produise, il est nécessaire que l'empilement comporte d'un côté de la couche de matériau électrochrome une source de cations, constituée d'une couche d'un électrolyte conducteur ionique et de l'autre côté une source d'électrons constituée par une couche électroconductrice. Par ailleurs, il est bien connu qu'à l'arrière de l'électrolyte conducteur ionique, il est très avantageux de prévoir une contre-électrode capable de recevoir les cations, libérés lors de la phase de désinsertion puis de les restituer en phase d'insertion. Cette contre-électrode doit de plus, dans un système fonctionnant en transmission, être dans un état non coloré ou décoloré lorsque l'électrode principale est elle-même à l'état décoloré. On conçoit aisément que ce rôle peut être plus particulièrement tenu par un matériau électrochrome ayant un fonctionnement inversé par rapport à celui de la couche principale ; les systèmes électrochromes les plus usités sont donc essentiellement basés sur des couples de matériaux électrochromes cathodique et anodique, le terme de contre-électrode étant réservé au moins performant de ces matériaux du point de vue de l'intensité de coloration obtenue.

Dans la demande de brevet EP-A-338 876, il a été ainsi proposé un système basé sur l'insertion réversible de protons, avec un couple de matériaux électrochromes oxyde de tungstène/oxyde d'iridium. Ce même couple a été également utilisé pour des systèmes basés sur l'insertion réversible d'ions lithium. Le choix de l'oxyde d'iridium comme matériau électrochrome anodique est lié à sa bonne résistance à la corrosion en milieu acide ou basique et au fait que sa coloration qui tend vers le marron n'interfère pas trop violemment avec la coloration bleu-nuit de la couche d'oxyde de tungstène.

Néanmoins, l'oxyde d'iridium a pour défaut de présenter une coloration résiduelle dans son état dit décoloré, ce qui est particulièrement gênant dans un système fonctionnant en transmission comme par exemple une fenêtre. La présente invention a précisément pour but de remédier à cet inconvénient en proposant des systèmes électrochromes comportant une couche mince de matériau électrochrome anodique à base d'oxyde d'iridium qui présente une plus faible coloration résiduelle et par la, avec un contraste amélioré.

L'objet de la présente invention consiste dans un procédé de traitement d'une couche de matériau électrochrome anodique à base d'oxyde d'iridium, procédé comportant une étape de formatage à courant imposé de cette couche dans un milieu liquide comportant un sel d'un cation, à l'exclusion du proton, susceptible de s'insérer dans le matériau électrochrome anodique de ladite couche. L'invention concerne également la couche obtenue par un tel traitement, et le système électrochrome qui l'utilise. Elle inclut ainsi un système électrochrome dont la contre-électrode à base d'oxyde d'iridium a subi un formatage par cyclage intensiostatique dans un milieu liquide comportant un sel d'un cation à l'exclusion du proton, ce cation, qui est susceptible de s'insérer dans la couche d'oxyde d'iridium, étant notamment un métal alcalin et de préférence du lithium.

Le formatage peut être réalisé avec tous types de cations susceptibles de s'insérer comme par exemple les cations des métaux alcalins, ou encore d'argent, de cuivre d'ammonium, etc..., des ions de plus grandes tailles semblant avoir un effet plus important de modification de la structure de la couche. Par contre, il n'est pas possible de le réaliser avec un acide, donc en milieu protonique, celui-ci attaquant directement la couche.

En pratique, et pour des questions essentiellement de cinétique des réactions d'insertion, on choisit d'utiliser un sel de lithium tel par exemple du trifluorométhane sulfonate de lithium (LiCF₃SO₃) en solution dans du polycarbonate de propylène (PC).

Le cyclage intensiostatique est opéré en réalisant un montage à 3 électrodes, avec une électrode de référence, de préférence à l'argent (Ag/Ag⁺), une contre-éléctrode par exemple de platine, la troisième électrode ou électrode testée étant constituée par la couche de matériau électrochrome anodique à base d'oxyde d'iridium déposée sur un substrat revêtu d'une couche électroconductrice, le potentiel appliqué entre l'électrode d'oxyde d'iridium et l'électrode de travail étant tel que l'intensité du courant mesurée entre l'électrode testée d'oxyde d'iridium et la contre-électrode soit constante pendant la durée de chaque phase d'insertion ou de désinsertion.

Le cyclage intensiostatique - où un courant est imposé - diffère donc fondamentalement d'autres moyens de cyclage connus comme le voltampèrométrique ou le cyclage potentiostatique où sont imposées des tensions données entre l'électrode testée et la contre-électrode en fonction du potentiel appliqué entre l'électrode testée et l'électrode de référence.

Il est bien connu qu'un tel cyclage voltampèrométrique d'une couche native de matériau électrochrome, et dans le cas de l'oxyde d'iridium, conduit à une très légère augmentation de ses performances, et plus particulièrement à une diminution de la transmission lumineuse à l'état coloré, la couche ayant en quelque sorte besoin d'un certain rodage. Néanmoins ce "rodage" est achevé après une dizaine de cycles voltampèrométriques, apporte un gain d'au plus 10 à 15 % sur la quantité de charges insérées, et surtout n'améliore pas de façon satisfaisante la transmission lumineuse à l'état décoloré qui reste bien inférieure à 60 %, dans le cas usuel d'une épaisseur comprise entre 40 et 80 nanomètres. Ces valeurs sont à rapprocher de la valeur de l'ordre de 80 % de la transmission lumineuse d'une couche d'oxyde d'indium dopé à l'étain, d'une résistance carré de 5 Ohm. La couche d'oxyde d'iridium conduit donc à une nette diminution des performances à l'état décoloré.

Par contre, en opérant selon l'invention un cyclage à courant constant, on peut obtenir des couches électrochromes à base d'oxyde d'iridium dont la transmission lumineuse à l'état décoloré est bien supérieure à 70 % (donc proche de la valeur limite de 80 %). Ces couches présentent par ailleurs un contraste, c'est-à-dire un rapport entre les transmissions lumineuses aux états décolorés et colorés, bien supérieur à 2, ce qui est particulièrement remarquable pour ce matériau électrochrome.

Lors du cyclage intensiostatique, la tension appliquée peut atteindre des valeurs sensiblement supérieures aux valeurs acceptées pour le fonctionnement du système électrochrome. Néanmoins, dans les conditions pratiquées, le système n'apparaît pas dégradé même après plusieurs centaines de cycles. Toutefois, l'effet maximum paraît être obtenu après une dizaine de cycles aussi cette phase du cyclage est de préférence limitée dans sa durée pour éviter tout risque de dégrader la couche.

Comme indiqué précédemment, les couches formatées selon l'invention peuvent être utilisées dans des systèmes basés sur l'insertion réversible d'ions lithium - et dans ce cas le cyclage intensiostatique sera arrêté après une phase d'insertion - ou dans des systèmes basés sur l'insertion réversible de protons, le cyclage intensiostatique étant alors arrêté après une phase de désinsertion donc après l'évacuation des ions lithium. Rappelons qu'une telle procédure de formatage est totalement inopérante en milieu protonique, la couche d'oxyde de tungstène étant alors totalement dégradée. La couche formatée de matériau électrochrome anodique est de préférence associée à une couche de matériau électrochrome cathodique à base d'oxyde de tungstène dont elle constitue ainsi la contre-électrode du système électrochrome.

La quantité de charge insérée puis désinsérée lors de chaque cycle intensiostatique est de préférence de l'ordre de la capacité d'insertion de la couche de matériau électrochrome cathodique du système, capacité d'insertion qui d'une manière bien connue peut se déterminer par cyclage voltampèrométrique. Par ailleurs, pour une couche d'oxyde d'iridium de 55 nanomètres, ou plus généralement entre 40 et 80 nanomètres, déposées par pulvérisation cathodique magnétron, il a été trouvé que le formatage améliore sensiblement le contraste, c'est-à-dire le rapport entre la transmission lumineuse à l'état décoloré et la transmission lumineuse à l'état coloré, si on respecte une quantité de charges pour chaque cycle comprise entre 20 et 40 mC et de préférence de l'ordre de 30 mC, cette dernière valeur étant de l'ordre de la capacité d'insertion d'une couche d'oxyde de tungstène de 350 nanomètres.

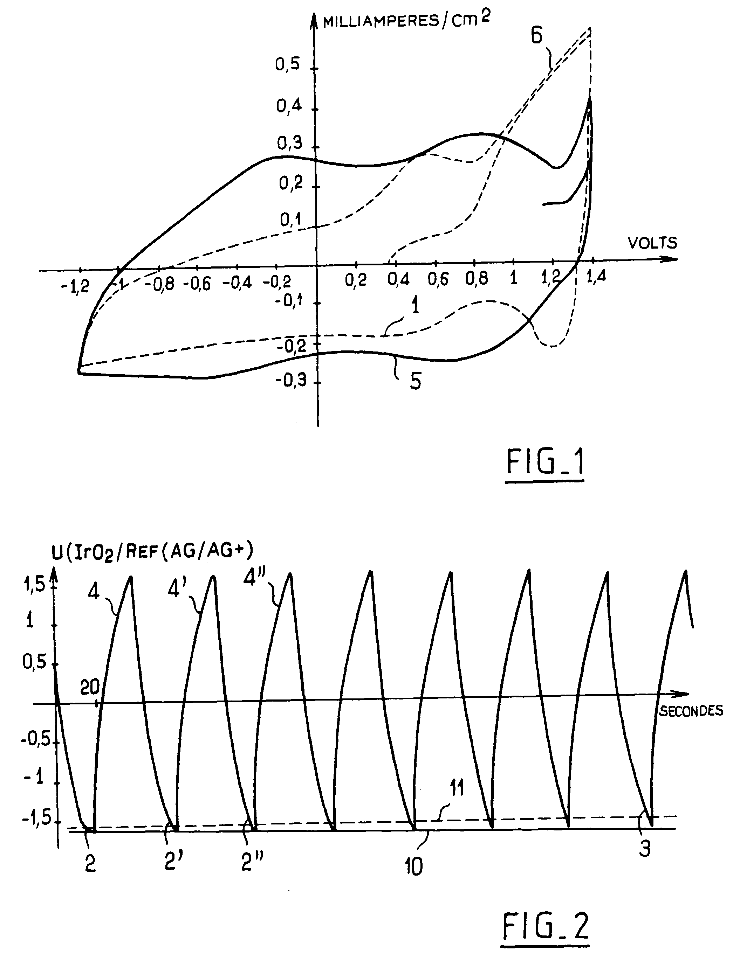

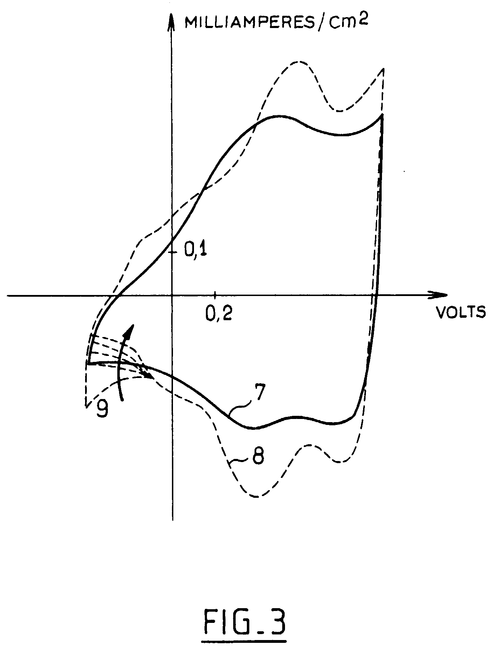

D'autres détails et caractéristiques avantageuses de l'invention ressortent de la description faite ci-après en référence aux dessins annexés qui représentent :
. **figure 1** : les voltamogrammes en électrolyte LiCF₃SO₃ d'une couche d'oxyde d'iridium avant et après formatage selon l'invention,
. **figure 2** : un diagramme montrant l'évolution, pendant le cyclage intensiostatique, du potentiel mesuré au cours du temps entre la couche d'oxyde d'iridium et l'électrode de référence Ag/Ag+,
. **figure 3** : les voltamogrammes en électrolyte H₃PO₄ d'une couche d'oxyde d'iridium avant et après formatage selon l'invention.

Les couches d'oxyde d'iridium ont été déposées par pulvérisation cathodique assistée par un champ magnétique, sous une pression de 6 millitors d'un mélange gazeux oxygène-hydrogène, dans un rapport 80-20. Ces couches sont déposées sur un substrat transparent, ici une feuille de verre float de 3 mm d'épaisseur, revêtu d'une couche électroconductrice transparente, ici une couche de 400 nanomètres d'oxyde d'indium dopé à l'étain, déposée par pulvérisation cathodique magnétron et dont la résistance carrée est de 5 Ohms avec une transmission lumineuse de 80%.

Le substrat ainsi revêtu est placé dans une cellule de 3 électrodes comportant comme électrolyte du trifluorométhane sulfonate de lithium en solution dans du carbonate de propylène, une électrode de référence Ag/Ag+ constituée d'un fil d'argent en contact avec une solution de perchlorate d'argent 0,01 M dissous dans du carbonate de propylène, et une contre-électrode de platine, la troisième électrode étant constituée par le substrat avec sa couche d'oxyde d'iridium.

Dans une première étape, la couche native, avant formatage, a été testée par voltamétrie cyclique, avec une vitesse de balayage de 0,02 volt par seconde ; le voltamogramme - c'est-à-dire la courbe représentative de la variation de l'intensité (en mA/cm²) du courant passant entre l'électrode et la contre-électrode en fonction du potentiel appliqué à l'électrode par rapport à l'électrode de référence - correspondant à cette couche native est indiqué en 1 (traits pointillés) à la figure 1. A noter qu'il correspond à une couche "rodée" dont le voltamogramme reste donc constant d'un cycle à l'autre. Cette couche native présente à l'état coloré une transmission lumineuse égale à 32 %. Mais surtout, cette transmission lumineuse n'est que de 55 % alors qu'à titre comparatif, la transmission lumineuse à l'état décoloré d'une couche d'oxyde de tungstène est supérieure à 80 %. Une telle couche non formatée a donc pour conséquence une certaine opacification du système électrochrome particulièrement gênante si celui-ci doit être utilisé pour des applications nécessitant des transmissions lumineuses maximum élevées.

Dans une seconde étape, cette même couche native a été formatée par cyclage intensiostatique en reprenant le même montage à 3 électrodes mais en imposant pour chaque cycle de coloration-décoloration un courant de 1,5 mA/cm² pendant 20 secondes, puis un courant inversé de -1,5 mA/cm² pendant à nouveau 20 secondes, ces valeurs ayant été sélectionnées pour une couche d'oxyde d'iridium de 55 nanomètres, à chaque cycle, on insère puis désinsère ainsi une charge de 30 milliCoulombs par centimètre carré. A la figure 2, on a représenté en fonction du temps écoulé en secondes, le potentiel entre l'électrode d'oxyde d'iridium et l'électrode de référence.

La quantité de charges insérées dépend dans une certaine mesure de l'épaisseur de la couche d'oxyde d'iridium. Les valeurs indiquées précédemment conviennent pour des épaisseurs ordinaires comprises entre 40 et 80 nanomètres. Pour des épaisseurs plus grandes, la charge doit être accrue, soit en augmentant le temps de chaque cycle, soit en augmentant l'intensité du courant.

Dans un tel cyclage intensiostatique, l'électrode de référence ne sert que pour la mesure du potentiel ; en pratique, les valeurs du potentiel n'ont pas à être mesurées, seul comptant le courant imposé entre l'électrode d'oxyde d'iridium et la contre-électrode.

D'autre part, dans l'exemple ici donné, cette contre-électrode est en platine, mais tout autre matériau conducteur peut également convenir. Il peut notamment être utilisé une autre électrode d'oxyde d'iridium qui sera ainsi formatée simultanément ou plus exactement avec un demi-cycle de décalage.

A noter par ailleurs que si la surface des plaques de verre est grande, il peut s'avérer utile de limiter l'intensité du courant de façon à s'affranchir des problèmes de chutes ohmiques dans l'électrolyte et d'inhomogénéite de potentiels sur les surfaces, la quantité de charges étant maintenue constante en augmentant le temps de chaque cycle.

Sur cette figure 2 on note tout d'abord que le potentiel mesuré atteint des valeurs bien supérieures à celles appliquées lors de la voltamétrie cyclique, et ceci plus particulièrement en phase d'insertion, donc de décoloration, le domaine de décoloration débutant à -1,2 Volts dans le cas de la figure 1, alors que pendant le formatage des valeurs inférieures à -1,5 volts sont observées. Par ailleurs, en début de cyclage intensiostatique, on observe la présence d'un palier 2 qui s'estompe petit à petit (2' - 2'') jusqu'à disparaître après 8-10 cycles (pic 3). De plus, le potentiel anodique correspondant croît petit à petit (en valeur absolue) comme le montre la droite 10 qui s'écarte progressivement de l'horizontale 11. Le même phénomène - quoique très peu visible figure 2, semble se produire en phase de désinsertion (amincissement des pics 4 - 4' - 4''... au cours du temps). Il se produit donc une modification en surface de la couche d'oxyde d'iridium, avec probablement un effet de structure, caractérisé par un déplacement des pics d'insertion, l'apparition d'autres pics sur le voltamogramme et le décalage de la surtension de dégagement d'oxygène vers les potentiels anodiques élevés.

Le cyclage intensiostatique a été mené pendant 15 cycles soit 600 secondes et la couche d'oxyde d'iridium a été à nouveau testée par voltampéromètrie, le voltamogramme correspondant est représenté par la courbe 5 de la figure 1. Il apparaît clairement que le voltamogramme obtenu est très différent de celui de la couche non formatée et définit une aire plus grande, autrement dit la quantité de charges insérées puis désinsérées est nettement supérieure. Par ailleurs, on note l'atténuation du pic extrême 6, en fin de phase de désinsertion qui correspond au dégagement de l'oxygène. Après formatage, ce dégagement apparaît pour des tensions plus élevées ce qui est le signe que des modifications de structure au moins superficielles se sont bien opérées.

Cette augmentation de la capacité d'insertion/désinsertion de la couche se traduit par une modification très importante des performances optiques, la transmission lumineuse à l'état décoloré passant de 55 % à 74 %, tandis que la transmission lumineuse à l'état coloré reste elle pratiquement inchangée ; en pratique, elle augmente légèrement pour atteindre 35 %. Phénomène qui pourrait être attribué au "nettoyage" de la couche d'oxyde d'iridium lors du formatage. A noter que cette très légère dégradation des performances en coloration n'est nullement gênante dès lors que la couche d'oxyde d'iridium est plus particulièrement destinée à servir de contre-électrode dans un système électrochrome dont l'électrode principale est à base d'oxyde de tungstène, l'état du système étant alors essentiellement lié à la coloration de la couche d'oxyde de tungstène. Plus significatif est par contre l'amélioration du contraste qui passe ici de 1,7 à 2,2.

Dans l'exemple relaté ci-dessus, on a procédé à 15 cycles de formatage, chaque cycle comportant 20 secondes à -1,5 mA par centimètre carré puis 20 secondes à +1,5 mA par centimètre carré. En pratique, une dizaine de cycles semble suffisant, un nombre plus important de cycle semblant pouvoir être effectué sans dommages pour le système. Par ailleurs, et tout en respectant l'identité des quantités de charges, on peut procéder avec des durées de phases d'insertion et de désinsertion différentes, soit par exemple 20 secondes à -1,5 mA pour l'insertion puis 40 secondes à 0,75 mA pour la désinsertion. Dans le cas des surfaces de grandes tailles, on optera plutôt pour des densités surfaciques de courant faibles afin d'éviter d'opérer avec des intensités trop grandes et de créer des inégalités de potentiel sur la surface à traîter.

Le formatage selon l'invention peut également être utilisé pour une couche d'oxyde d'iridium destinée à un système électrochrome basé sur l'insertion réversible de protons. Pour cela, une couche native préparée comme précédemment a été formatée en milieu LiCF₃S0₃, pendant 14 cycles et demi - donc en terminant la procédure de formatage avec une couche désinsérée. Puis cette couche a été testée par voltamétrie cyclique mais cette fois en milieu H₃PO₄. La figure 3 montre les voltamogrammes enregistrés dans ces conditions avant (courbe 7) et après formatage (courbe 8). Comme précédemment, la quantité de charges insérées et désinsérées est nettement accrue. Cette amélioration se retrouve au niveau des performances optiques, la transmission lumineuse étant maintenant de 80 % à l'état décoloré.

Sur cette figure 3 on observe également la présence d'un pic 9 en phase d'insertion, pic qui s'estompe peu à peu et qui correspond probablement au rejet vers l'électrolyte des quelques ions lithium non totalement désinsérés en fin de formatage.

## Revendications

1. Procédé de traitement d'une couche de matériau électrochrome anodique à base d'oxyde d'iridium, **caractérisé en ce qu'**il comporte une étape de formatage de la couche par cyclage à courant imposé dans un milieu liquide comportant un sel d'un cation, à l'exclusion du proton, susceptible de s'insérer dans le matériau électrochrome anodique de ladite couche.

2. Procédé selon la revendication 1, **caractérisé en ce que** ledit cation est un cation d'un métal alcalin.

3. Procédé selon la revendication 2, **caractérisé en ce que** ledit métal alcalin est du lithium.

4. Procédé selon l'une des revendications précédentes **caractérisé en ce que** ledit milieu liquide est constitué par du trifluorométhane sulfonate de lithium (Li CF₃ SO₃) en solution dans du carbonate de propylène (PC).

5. Procédé selon l'une des revendications précédentes, **caractérisé en ce que** la couche de matériau électrochrome anodique est utilisée après formatage dans un système électrochrome basé sur l'insertion réversible de protons.

6. Procédé selon l'une des revendications 1 à 4, **caractérisé en ce que** la couche de matériau électrochrome anodique est utilisée après formatage dans un système électrochrome basé sur l'insertion réversible d'ions lithium.

7. Procédé selon l'une des revendications précédentes, **caractérisé en ce que** ladite couche électrochrome anodique est associée après formatage à une couche de matériau électrochrome cathodique à base d'oxyde de tungstène.

8. Procédé selon la revendication 7, **caractérisé en ce que** pour chaque cycle de formatage à courant imposé, on insère et désinsère une charge sensiblement identique à la capacité d'insertion de la couche d'oxyde de tungstène, telle que mesurée par cyclage voltampèrométrique.

9. Procédé selon l'une des revendications précédentes, **caractérisé en ce que** pour chaque cycle de formatage à courant imposé, on insère et désinsère une charge comprise entre 20 et 40 mC et de préférence de l'ordre de 30 mC, pour une couche d'oxyde d'iridium d'une épaisseur comprise entre 40 et 80 nanomètres.

10. Procédé selon l'une des revendications précédentes, **caractérisé en ce que** les phases d'insertion et de désinsertion de chaque cycle de formatage sont d'une durée identique, et de préférence de l'ordre de 20 secondes chaque.

11. Procédé selon l'une des revendications précédentes, **caractérisé en ce que** la phase de désinsertion des cycles de formatage est d'une durée supérieure, et de préférence de l'ordre du double, de la durée de la phase d'insertion desdits cycles.

12. Procédé selon l'une des revendications précédentes, **caractérisé en ce que** l'on effectue entre 10 et 15 cycles d'insertion/désinsertion.

13. Couche de matériau électrochrome anodique à base d'oxyde d'iridium susceptible d'être obtenue par le procédé conforme à l'une des revendications précédentes, **caractérisée en ce qu'**elle présente une transmission lumineuse à l'état décoloré supérieure à 70 %, notamment proche de 80 %, pour une épaisseur comprise entre 40 et 80 nm.

14. Couche de matériau électrochrome anodique à base d'oxyde d'iridium susceptible d'être obtenue par le procédé conforme à l'une des revendications 1 à 12, **caractérisée en ce qu'**elle présente un contraste supérieur à 2.

15. Système électrochrome comprenant une couche de matériau électrochrome anodique à base d'oxyde d'iridium susceptible d'être obtenue par le procédé conforme à l'une des revendications 1 à 12.

16. Système électrochrome selon la revendication 15 comportant une couche électroconductrice transparente, une couche d'oxyde de tungstène, un électrolyte comportant un sel de lithium, la couche d'oxyde d'iridium ayant une épaisseur comprise entre 40 et 80 nanomètres et une couche électroconductrice transparente, **caractérisé par** une transmission lumineuse supérieure ou égale à 60 % et de préférence de l'ordre de 80 % à l'état décoloré.

## Patentansprüche

1. Verfahren zur Behandlung einer Schicht aus einem anodischen elektrochromen Material auf der Grundlage von Iridiumoxid, **dadurch gekennzeichnet, daß** es eine Stufe zur Konditionierung der Schicht durch Wechselbehandlung mit fließendem elektrischem Strom in einem flüssigen Medium umfaßt, das ein Salz eines Kations enthält, das kein Proton ist und sich in das anodische elektrochrome Material dieser Schicht einlagern kann.

2. Verfahren nach Anspruch 1, **dadurch gekennzeichnet, daß** das Kation ein Alkalimetallkation ist.

3. Verfahren nach Anspruch 2, **dadurch gekennzeichnet, daß** das Alkalimetall Lithium ist.

4. Verfahren nach einem der vorhergehenden Ansprüche, **dadurch gekennzeichnet, daß** das flüssige Medium aus in Polypropylencarbonat (PC) gelöstem Trifluormethanlithiumsulfonat (LiCF₃SO₃) besteht.

5. Verfahren nach einem der vorhergehenden Ansprüche, **dadurch gekennzeichnet, daß** die Schicht aus anodischem elektrochromem Material nach der Konditionierung in einem elektrochromen System verwendet wird, das auf der reversiblen Einlagerung von Protonen basiert.

6. Verfahren nach einem der Ansprüche 1 bis 4, **dadurch gekennzeichnet, daß** die Schicht aus anodischem elektrochromem Material nach der Konditionierung in einem elektrochromen System verwendet wird, das auf der reversiblen Einlagerung von Lithiumionen basiert.

7. Verfahren nach einem der vorhergehenden Ansprüche, **dadurch gekennzeichnet, daß** die anodische elektrochrome Schicht nach der Konditionierung mit einer Schicht aus kathodischem elektrochromem Material auf der Grundlage von Wolframoxid verbunden wird.

8. Verfahren nach Anspruch 7, **dadurch gekennzeichnet, daß** bei jedem Konditionierungszyklus mit fließendem Strom eine Ladung ein- und ausgelagert wird, welche im wesentlichen dem Einlagerungsvermögen der Wolframoxidschicht entspricht, wie es durch voltamperemetrische Wechselbehandlung gemessen wird.

9. Verfahren nach einem der vorhergehenden Ansprüche, **dadurch gekennzeichnet, daß** bei jedem Konditionierungszyklus mit fließendem Strom an einer 40 bis 80 Nanometer dicken Iridiumoxidschicht eine Ladung von 20 bis 40 mC und vorzugsweise von etwa 30 mC ein- und ausgelagert wird.

10. Verfahren nach einem der vorhergehenden Ansprüche, **dadurch gekennzeichnet, daß** die Dauer der Ein- und der Auslagerungsphase jedes Konditionierungszyklus gleich ist und vorzugsweise etwa 20 Sekunden beträgt.

11. Verfahren nach einem der vorhergehenden Ansprüche, **dadurch gekennzeichnet, daß** die Dauer der Auslagerungsphase der Konditionierungszyklen größer ist und vorzugsweise etwa das Doppelte der Dauer der Einlagerungsphase dieser Zyklen beträgt.

12. Verfahren nach einem der vorhergehenden Ansprüche, **dadurch gekennzeichnet, daß** zwischen 10 und 15 Ein- und Auslagerungszyklen durchgeführt werden.

13. Schicht aus anodischem elektrochromem Material auf der Grundlage von Iridiumoxid, welche durch das Verfahren nach einem der vorhergehenden Ansprüche erhalten werden kann, **dadurch gekennzeichnet, daß** sie bei einer Dicke von 40 bis 80 nm im entfärbten Zustand einen Lichttransmissionsgrad von über 70 % und insbesondere von etwa 80 % aufweist.

14. Schicht aus anodischem elektrochromem Material auf der Grundlage von Iridiumoxid, welche durch das Verfahren nach einem der Ansprüche 1 bis 12 erhalten werden kann, **dadurch gekennzeichnet, daß** sie ein Lichttransmissionsverhältnis von größer als 2 aufweist.

15. Elektrochromes System, das eine Schicht aus anodischem elektrochromem Material auf der Grundlage von Iridiumoxid enthält, welche durch das Verfahren nach einem der Ansprüche 1 bis 12 erhalten werden kann.

16. Elektrochromes System nach Anspruch 15, das eine transparente elektrisch leitfähige Schicht, eine Wolframoxidschicht, einen ein Lithiumsalz enthaltenden Elektrolyten, die 40 bis 80 Nanometer dicke Iridiumoxidschicht und eine transparente elektrisch leitfähige Schicht umfaßt, **dadurch gekennzeichnet, daß** es im entfärbten Zustand einen Lichttransmissionsgrad von größer oder gleich 60 % und vorzugsweise von etwa 80 % aufweist.

## Claims

1. Method of treating a film of anodic electrochromic material based upon iridium oxide, characterized in that the method comprises a step of formatting the film by imposed current cycling in a liquid medium containing a salt of a cation, excluding the proton, capable of becoming inserted into the anodic electrochromic material of said film.

2. Method according to claim 1, characterized in that said cation is a cation of an alkali metal.

3. Method according to claim 2, characterized in that said alkali metal is lithium.

4. Method according to one of the preceding claims, characterized in that said liquid medium is constituted of lithium trifluoromethane sulphonate (Li CF₃ SO₃) in solution in propylene carbonate (PC).

5. Method according to one of the preceding claims, characterized in that the film of anodic electrochromic material is used after formatting in an electrochromic system based upon the reversible insertion of protons.

6. Method according to one of claims 1 to 4, characterized in that the film of anodic electrochromic material is used after formatting in an electrochromic system based upon the reversible insertion of lithium ions.

7. Method according to one of the preceding claims, characterized in that said anodic electrochromic film is associated after formatting with a film of cathodic electrochromic material based upon tungsten oxide.

8. Method according to claim 7, characterized in that, for each imposed current formatting cycle,a charge substantially identical to the insertion capacity of the tungsten oxide film, as measured by voltametric cycling,is inserted and deinserted.

9. Method according to one of the preceding claims, characterized in that, for each imposed current formatting cycle, a charge lying between 20 and 40 mC and preferably of the order of 30 mC is inserted and deinserted for an iridium oxide film of thickness between 40 and 80 nanometres.

10. Method according to one of the preceding claims, characterized in that the insertion and deinsertion phases of each formatting cycle are of identical duration and preferably of the order of 20 seconds each.

11. Method according to one of the preceding claims, characterized in that the deinsertion phase of the formatting cycles is of a longer duration than, and preferably of the order of twice as long as, the duration of the insertion phase of said cycles.

12. Method according to one of the preceding claims, characterized in that from 10 to 15 insertion/deinsertion cycles are performed.

13. Film of anodic electrochromic material based upon iridium oxide capable of being produced by the method in accordance with one of the preceding claims, characterized in that it has a light transmission in the decoloured state greater than 70%, notably close to 80%, for a thickness of from 40 to 80 nm.

14. Film of anodic electrochromic material based upon iridium oxide capable of being produced by the method according to one of claims 1 to 12, characterized in that it has a contrast greater than 2.

15. Electrochromic system comprising a film of anodic electrochromic material based upon iridium oxide capable of being produced by the method according to one of claims 1 to 12.

16. Electrochromic system according to claim 15, comprising a transparent electrically conducting film, a film of tungsten oxide, an electrolyte containing a lithium salt, the film of iridium oxide having a thickness of from 40 to 80 nanometres, and a transparent electrically conducting film, characterized by a light transmission greater than or equal to 60% and preferably of the order of 80% in the decoloured state.
